Europäisches Patentamt

**European Patent Office**

Office européen des brevets

(11) Veröffentlichungsnummer: **0 017 807**
**B1**

(12) **EUROPÄISCHE PATENTSCHRIFT**

(45) Veröffentlichungstag der Patentschrift:
**16.06.82**

(21) Anmeldenummer: **80101563.7**

(22) Anmeldetag: **25.03.80**

(51) Int. Cl.³: **B 23 K 7/02**

(54) **Verfahren zur Verhinderung der Brennbartbildung beim Trennen metallurgischer Erzeugnisse und Vorrichtung zur Durchführung des Verfahrens.**

(30) Priorität: **11.04.79 DE 2914628**

(43) Veröffentlichungstag der Anmeldung:
**29.10.80 Patentblatt 80/22**

(45) Bekanntmachung des Hinweises auf die Patenterteilung:
**16.06.82 Patentblatt 82/24**

(84) Benannte Vertragsstaaten:
**AT BE DE FR GB IT NL SE**

(56) Entgegenhaltungen:
**DE-A-2 718 748**
**DE-B-1 212 393**

(73) Patentinhaber: **Thyssen Aktiengesellschaft vorm. August Thyssen-Hütte, D-4100 Duisburg (DE)**

(72) Erfinder: **Radtke, Waldemar, Hühnerstrasse 60, D-4200 Oberhausen 14 (DE)**

(74) Vertreter: **Cohausz, Werner, Dipl.-Ing. et al, Schumannstrasse 97, D-4000 Düsseldorf (DE)**

ACTORUM AG

## Verfahren zur Verhinderung der Brennbartbildung beim Trennen metallurgischer Erzeugnisse und Vorrichtung zur Durchführung des Verfahrens

Die Erfindung bezieht sich auf ein Verfahren zur Verhinderung der Brennbartbildung beim Trennen metallurgischer Erzeugnisse, wie Blöcke, Brammen oder plattenförmiger Werkstücke, beim Querteilen des Giessstranges in Stranggiessanlagen und beim Längsteilen bereits abgelängter Stranggussbrammen, bei dem die Erzeugnisse mit einem oder mehreren auf einer Seite des Erzeugnisses angeordneten, der vorgegebenen Schnittlinie folgenden Autogen- oder Plasmaschneidbrennern geteilt werden und bei dem sich auf der den Schneidbrennern zugewandten Oberfläche des Erzeugnisses eine vordere Schnittkante und auf der anderen Seite des Erzeugnisses eine hintere Schnittkante ausbilden. Ferner bezieht sich die Erfindung auf eine Vorrichtung zur Durchführung dieses Verfahrens.

Das Verfahren kommt u.a. in den Fällen zur Anwendung, in denen Blöcke, Knüppel oder Brammen oder auch metallische plattförmige Werkstücke geringerer Dicke auf vorher festgelegte Längen und/oder Breiten unterteilt werden sollen. So wird das Verfahren beispielsweise bei der Querteilung des Stranges in Stranggiessanlagen angewendet, indem der Strang unmittelbar nach dem Durchlaufen der letzten Transportrollen der Giessanlage im noch heissen Zustand in einzelne Stranggussbrammen unterteilt wird. In der Praxis wird das Verfahren z.B. auch eingesetzt, um die bereits abgelängten noch heissen Stranggussbrammen unmittelbar und ohne Verzögerung längszuteilen oder erst längszuteilen, nachdem sie abtransportiert worden und bereits erkaltet sind.

Bei diesem Verfahren wird das Trennen üblicherweise mit Hilfe mindestens eines Autogenschneidbrenners durchgeführt. Zur Erhöhung der Schnittgeschwindigkeit ist es beispielsweise bekannt, dabei pro Schneidstelle zwei Autogenschneidbrenner einzusetzen. In jüngster Zeit ist auch bereits versucht worden, bei der Durchführung dieses Verfahrens Plasmabrenner einzusetzen.

Wird dieses Verfahren zum Trennen metallurgischer Erzeugnisse gewählt, so ist man grundsätzlich daran interessiert, Flächen und Ränder der Schnittfuge von zufriedenstellender Güte zu erreichen. Ganz besonders ist man bestrebt, Flächen und Ränder zu erhalten, die keiner Nacharbeit bedürfen.

Bei einem in der DE-A-27 18 748 als Stand der Technik vorausgesetzten Verfahren dieser Gattung wird das Trennen mit einem Schneidbrenner vorgenommen, der über dem Erzeugnis angeordnet ist und sich an einem Träger abstützt. Das Erzeugnis ist vorzugsweise waagerecht auf einer Unterlage und die Achse des Schneidbrenners dazu derart angeordnet, dass der Schneidstrahl nach unten aus dem Schneidbrenner austritt.

Zu Beginn des Schneidvorganges wird der Schneidbrenner mit Hilfe des Trägers an diejenige Kante des Erzeugnisses gefahren, von der aus der Schnitt durchgeführt werden soll. Ist die Vorerhitzung erfolgt, so wird auf Schneidbetrieb umgeschaltet. Gleichzeitig wird die Vorschubbewegung des beweglichen Trägers oder wie beispielsweise im Falle der Querteilung in Stranggiessanlagen die Vorschubbewegung des beweglichen Brenners an dem gegenüber dem Erzeugnis feststehenden Träger eingeschaltet, und der Brenner bewegt sich der vorgegebenen Schnittlinie folgend auf die gegenüberliegende Kante des Erzeugnisses zu.

Die für das Trennen benötigte Zeit kann dabei z.B. dadurch verringert werden, dass zwei einzelne Schneidbrenner gewählt werden, die sich von den einander gegenüberliegenden Kanten des Erzeugnisses aufeinander zu bewegen. Zur Verringerung der Schneidzeit ist auch bereits vorgeschlagen worden, das Schneiden mit Hilfe von zwei in Schnittrichtung gesehen hintereinander angeordneten und unabhängig voneinander einstellbaren Autogenschneidbrennern durchzuführen, die eine gemeinsame Schnittfuge in dem Erzeugnis bilden. In beiden Fällen, d.h. sowohl beim Einsatz von nur einem Schneidbrenner, als auch beim Einsatz von zwei Schneidbrennern, bildet sich an der augenblicklichen Schneidstelle eine Schnittfläche aus.

Unter «Schnittfläche» ist die Reaktionsfläche des Schneidvorganges zu verstehen, an der der Schneidstrahl des bzw. der Schneidbrenner das Material während des Schneidvorganges schmilzt und entfernt. Die Schnittfläche hat in Strömungsrichtung des bzw. der Schneidstrahlen gesehen auf der dem bzw. den Schneidbrennern zugewandten Oberfläche des Erzeugnisses eine vordere und auf der anderen, gegenüberliegenden Seite des Erzeugnisses eine hintere Schnittkante, die bei waagerecht z.B. auf einer Unterlage aufliegenden Erzeugnissen oben bzw. unten liegen. Dabei geht insbesondere die hintere bzw. untere Schnittkante an ihren beiden Enden in je einen der beiden hinteren bzw. unteren Ränder der fertigen Schnittfuge über.

Die bekannten Brennschneidverfahren mit nur einem oder auch zwei Schneidbrennern pro Schneidstelle haben jedoch den Nachteil, dass sich an den Rändern der Schnittfuge auf der Unterseite des Erzeugnisses dicke Wulste aus einem erstarrten Metall-Schlacke-Gemisch, sogenannte Brennbärte, bilden. Diese Brennbärte bestehen aus einem Teil des Metalls der Schnittfuge, das durch die Schneidbrenner geschmolzen, zum Teil verbrannt und mit dem Schneidstrahl des bzw. der Schneidbrenner nach unten mitgerissen wird. Eine bestimmte Menge dieses Metall-Schlacke-Gemisches fällt dabei in Tröpfchenform von der Bramme ab, während der andere Teil an den Rändern der Schnittfuge erstarrt und mehrere Zentimeter dicke Wulste bilden kann. Die Praxis hat nun gezeigt, dass beispielsweise Knüppel und Brammen mit derartigen Brennbärten in diesem Zustand unmittelbar im Anschluss an den Trennvorgang nicht warmgewalzt werden können. Es ist daher erforderlich, dass die Brennbärte vorher, z.B. durch ein Schleifen, Hobeln oder auch durch ein Flämmen entfernt werden. In vielen Fällen ist neben diesem zusätzlichen Arbeitsgang auch noch eine apparativ aufwendige Wendevorrichtung erforderlich.

Um diese Nachteile zu vermeiden, ist aus der DE-A-27 18 748 der Vorschlag bekannt, dass der Brenner unter dem Erzeugnis entlangbewegt und der Schneidstrahl von unten nach oben gerichtet wird. Bei diesem Verfahren sollen sich angeblich keine Brennbärte bilden. Der auf die Oberfläche des Erzeugnisses zurückfallende Auswurf aus der Schnittfuge soll beim anschliessenden Walzen nicht stören und braucht daher nicht entfernt zu werden. Tatsächlich bilden sich aber auch bei diesem bekannten Verfahren Ablagerungen an den oberen Rändern der Schnittfuge aus und man erhält auch keine sauberen und ebenen Flächen der Schnittfuge. Ein weiterer Nachteil dieses Verfahrens ist darin zu sehen, dass durch die starke Rauchentwicklung und durch den in grossem Umkreis um die Schneidstelle versprühten Auswurf insbesondee unerwünschte Verschmutzungen verursacht werden, die wiederum durch besondere apparative Massnahmen vermieden werden müssen.

Aus der DE-B-12 12 393 ist es bekannt, beim Brennschneiden in Vertikal-Stranggiessanlagen schräg von unten auf die aus der Schnittfuge austretende Schlacke einen Druckwasserstrahl zu richten, um damit eine Schlackenbartbildung zu verhindern. Diese Methode ist jedoch, wie sich herausgestellt hat, nicht wirksam. Sie ist mit einem hohen Wasserverbrauch verbunden und erfordert beispielsweise eine zusätzliche Wasserreinigungsvorrichtung.

Der Erfindung liegt die Aufgabe zugrunde, ein Verfahren der eingangs genannten Art zu entwikkeln und eine Vorrichtung zur Durchführung dieses Verfahrens zu schaffen, die vorzugsweise die Bildung von Brennbärten an den Rändern der Schnittfuge beim Trennen metallurgischer Erzeugnisse wirksam und ohne den grossen bei bekannten Verfahren zum Teil erforderlichen apparativen Aufwand vermeiden.

Zur Lösung dieser Aufgabe werden die in den Ansprüchen angegebenen Massnahmen und Vorrichtungsmerkmale vorgeschlagen.

Die Brennbärte bilden sich durch an der hinteren Schnittkante abtropfendes und an den beiden hinteren Rändern der Schnittfuge anbakkendes Material. Dieses Anbacken kann bereits dadurch verhindert werden, dass die hintere Schnittkante· erfindungsgemäss mit mindestens einem ·kalten gasförmigen Strahl angeblasen wird.

Der erfindungsgemäss vorgesehene gasförmige Strahl ist zusätzlich zu dem oder den Schneidstrahlen vorgesehen. Bevorzugt ist es, dass die hintere Schnittkante durch mindestens zwei zur Schnittfuge symmetrische gasförmige Strahlen angeblasen wird. Insbesondere wird dadurch ermöglicht, dass gemäss einer weiteren vorteilhaften Ausgestaltung des erfindungsgemässen Verfahrens die gasförmigen Strahlen auf die Bereiche gerichtet sind, in denen die hintere Schnittkante in die Ränder der Schnittfuge übergeht. Auf diese Weise werden durch die gasförmigen Strahlen die Bereiche bestrichen, an denen sich bevorzugt Brennbärte bilden.

Bei Anwendung des erfindungsgemässen Verfahrens wird das Gemisch aus geschmolzenem Metall und flüssiger Schlacke von der hinteren Schnittkante weggeblasen, so dass es gar nicht erst zur Bildung der sonst üblichen Brennbärte kommt.

Nach einer weiteren vorteilhaften Ausgestaltung des erfindungsgemässen Verfahrens soll die hintere Schnittkante in Richtung der fortschreitenden Schnittfuge angeblasen werden, wodurch das Haftenbleiben von Brennbärten besonders gut verhindert werden kann. Dabei sollen die gasförmigen Strahlen bevorzugt unter einem Winkel im Bereich von 0° bis ± 30°, vorzugsweise im Bereich von 0° bis ± 15°, zur Tangentialebene des Erzeugnisses im Bereich der hinteren Schnittkante auf diese gerichtet werden. Die gasförmigen Strahlen können im Vergleich zu dem Schneidstrahl der Schneidbrenner ein schwächerer Luft- oder Sauerstoffstrahl sein. «Schwächer» bedeutet, dass der Gasdruck des bzw. der gasförmigen Strahlen, die aus den dem oder den Schneidbrennern zugeordneten Gasstahldüsen austreten, niedriger ist als der Druck des aus den Schneidbrennern austretenden Schneidstrahls. Dabei ist auch der Austrittsquerschnitt der Gasstrahldüsen kleiner als der der Schneidbrenner. Wird erfindungsgemäss ein auch gegenüber einem Luftstrahl schwächerer Sauerstoffstrahl gewählt, so besteht ein weiterer Vorteil des erfindungsgemässen Verfahrens darin, dass das Metall-Schlacke-Gemisch nicht nur von der hinteren Schnittkante weggeblasen, sondern zusätzlich noch verbrannt wird. Selbst wenn ein Rest des Gemischs haften bleiben sollte, wird er in diesem Fall in vorteilhafter Weise von dem Sauerstoffstrahl abgebrannt.

Druck und Richtung der gasförmigen Strahlen sollen unabhängig von dem Schneidstrahl der Schneidbrenner, vorzugsweise unabhängig voneinander einstellbar sein können. Dadurch wird erreicht, dass das Metall-Schlacke-Gemisch von der hinteren Schnittkante auch dann weggeblasen wird, wenn das Gemisch, nicht gleichmässig über die Länge der hinteren Schnittkante verteilt, von dieser abtropft.

Nach dem erfindungsgemässen Verfahren ist es möglich, die Erzeugnisse in warmem als auch in kaltem Zustand zu schneiden. Zum Anblasen der hinteren Schnittkante wird erfindungsgemäss eine einen flachen Strahl erzeugende Formstrahldüse, wie eine Mehrlochfächerdüse, etwa Zwei- oder Vierlochdüse, oder eine Flachstrahldüse eingesetzt. Bei Verwendung einer Vierlochdüse sollen zwei Gruppen je zweier paralleler Bohrungen vorgesehen sein, wobei die Bohrungsachsen jeder Gruppe mit der Mittelachse der Düse einen Winkel von 10 bis 20° einschliessen und die Bohrungsachsen der beiden Gruppen in einem Winkel von 20 bis 40° zueinander und die Achsen aller Bohrungen in derselben Ebene liegen.

Die Gasstrahldüsen sollen gemäss einer bevorzugten Ausgestaltung der erfindungsgemässen Vorrichtung über eine Haltevorrichtung und ein durch die Schnittfuge hindurchführbares Schwert mit den Schneidbrennern zur gemeinsamen Verfahrbarkeit mechanisch verbunden sein. Dabei besteht die Haltevorrichtung bevorzugt aus einer Anstellvorrichtung für das wegklappbare oder zurückziehbare Schwert und aus einem Distanzstück. Das Schwert kann gekühlt sein.

Anhand der in der Zeichnung dargestellten Ausführungsbeispiele wird die Erfindung und eine zur Durchführung des erfindungsgemässen Verfahrens geeignete Vorrichtung näher erläutert.

Fig. 1 zeigt schematisch eine erfindungsgemässe Schneidvorrichtung in Seitenansicht,

Fig. 2 zeigt die Anordnung einer Gasstrahldüse und

Fig. 3 die Anordnung einer Zweilochdüse,

Fig. 4 zeigt die Anordnung von zwei Gasstrahldüsen im Bereich der Schnittfuge und

Fig. 5 eine Vierlochdüse.

Oberhalb des zu trennenden Erzeugnisses 1, das in diesem Fall waagerecht auf einer nicht dargestellten Unterlage aufliegt, ist der Schneidbrenner 2 angeordnet, dessen Schneidstrahl 3 die fortlaufende Schnittfläche 4 mit der oberen Schnittkante 5 und unteren (hinteren) Schnittkante 6 erzeugt, wodurch die Schnittfuge 7 gebildet wird.

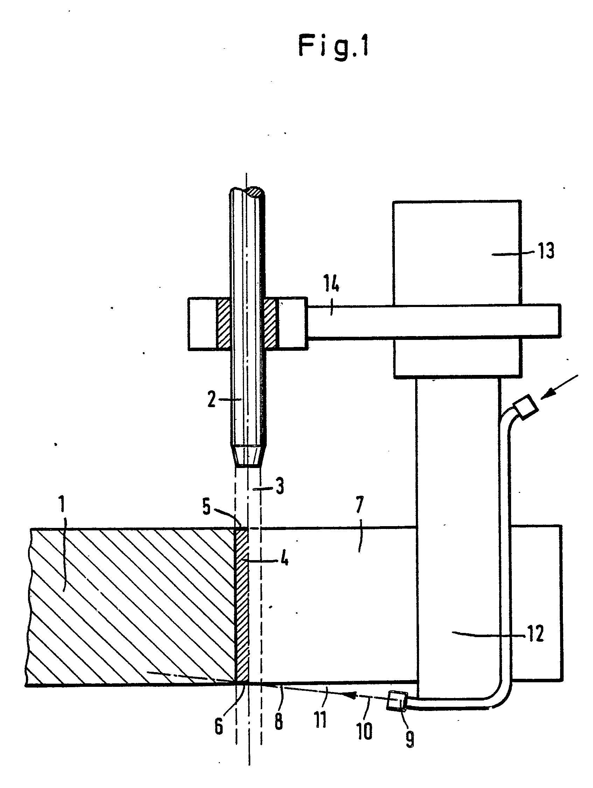

Zur Vermeidung der sich an den unteren Rändern 8 der Schnittfuge 7 ansetzenden Brennbärte ist erfindungsgemäss die Gasstrahldüse 9 angeordnet, wobei die aus ihr austretenden gasförmigen Strahlen 10, wie in Fig. 1 dargestellt, unter einem zur Oberfläche des Erzeugnisses im Bereich der unteren Schnittkante 6 spitzen Winkel 11 geneigt auf die untere Schnittkante 6 gerichtet sind. Statt dessen können die gasförmigen Strahlen 10 auch parallel oder schräg von oben nach unten unter einem spitzen Winkel zur Oberfläche des Erzeugnisses geneigt auf die untere Schnittkante 6 gerichtet sein.

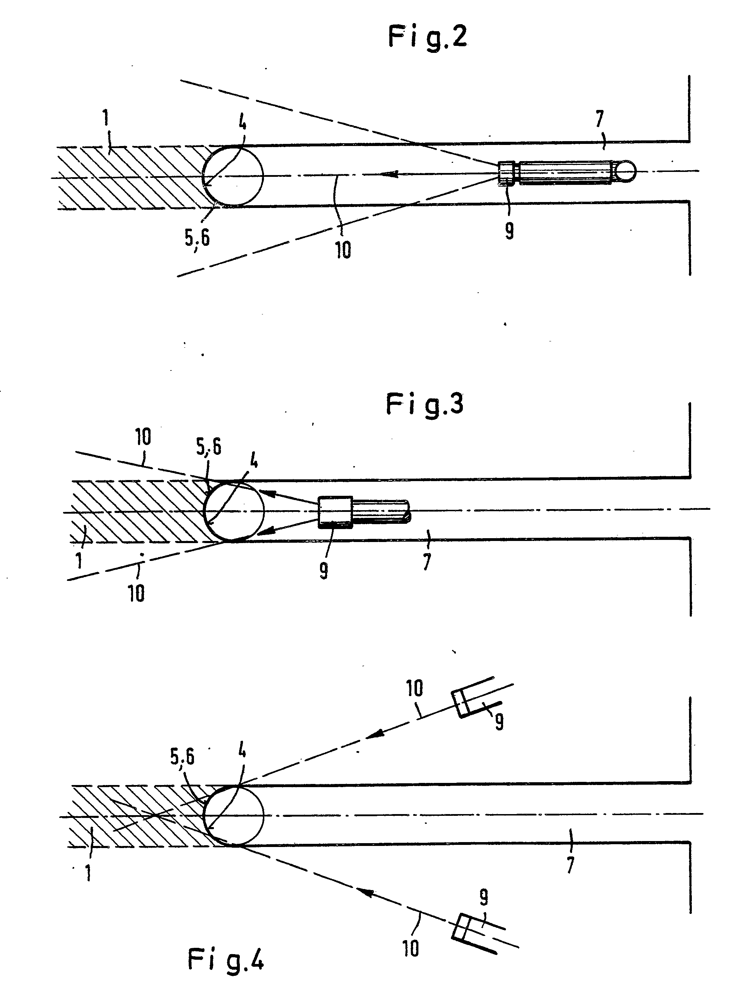

Bei Anordnung von nur einer Gasstrahldüse 9 wird diese wie Fig. 2 und 3 zeigen, bevorzugt in der Schnittfuge 7 geführt, während bei Anordnung von zwei Gasstrahldüsen 9 gemäss Fig. 4 diese unterhalb des Erzeugnisses 1 geführt sind. Wird die Gasstrahldüse 9 in der Schnittfuge 7 geführt, so kann sie auch eine Zweilochdüse gemäss Fig. 3 sein.

Zur gemeinsamen Verfahrbarkeit des Schneidbrenners 2 und der Gasstrahldüsen 9 können diese über ein Distanzstück 14 und ein Schwert 12 mechanisch miteinander verbunden sein. Um das Anstellen und Anheben der Gasstrahldüsen 9 aus der Stellung innerhalb oder unterhalb der Schnittfuge 7 zu bewirken, kann das Schwert 12 mittels einer Anstellvorrichtung 13 heb- und senkbar und auch wegklappbar angeordnet sein.

Die zur Durchführung des erfindungsgemässen Verfahrens geeignete Vorrichtung ist nicht nur in der in Fig. 1 dargestellten Anordnung arbeitsfähig.

Diese Anordnung mit oberhalb des Erzeugnisses 1 angeordneten Schneidbrennern 2 bietet sich jedoch zur Verbesserung der Abfuhr des an der Schnittfläche 4 abgeschmolzenen und an der unteren Schnittkante 6 abtropfenden Materials nach unten an.

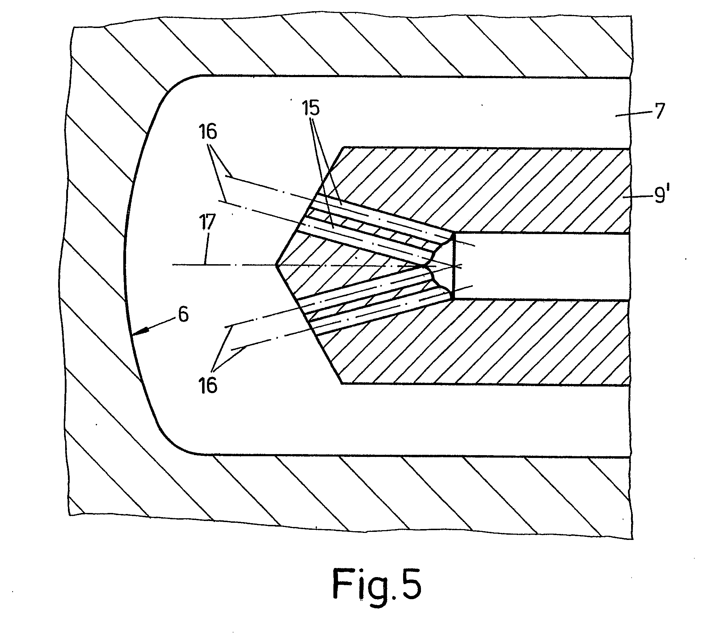

Die in Fig. 5 dargestellte in der Schnittfuge 7 vor der hinteren Schnittkante 6 angeordnete Vierlochdüse 9' weist zwei Gruppen mit je zwei parallelen Bohrungen 15 auf. Die Achsen 16 jeder Gruppe von Bohrungen 15 sind parallel und schliessen mit der Mittelachse 17 der Düse 9' einen Winkel von 10 bis 20° ein. Die Achsen 16 der beiden Gruppen von Bohrungen 15 schliessen dementsprechend einen Winkel von 20 bis 40° ein. Alle Achsen 16 der Bohrungen 15 liegen dabei in derselben Ebene. Durch die Bohrungen 15 strömt aus dem Innern der Düse 9' Gas auf die hintere Schnittkante 6 und die Übergangsbereiche zwischen dieser und den Längskanten der Schnittfuge 7. Der Abstand zwischen den Austrittsöffnungen der Bohrungen 15 der Düse 9' und der hinteren Schnittkante 6 hängt von verschiedenen Parametern ab, insbesondere der Breite der Schnittfuge 7 und der Winkelstellung der Bohrungsachsen 16 zur Mittelachse 17 der Düse 9', aber auch von der Geschwindigkeit der austretenden Gasstrahlen. Als Richtgrösse kann hier ein Abstand von etwa 20 bis 80 mm, vorzugsweise 30 bis 60 mm angegeben werden. In der Praxis hat sich eine Düse mit einem Durchmesser von 7 mm und Bohrungsdurchmessern von 1,5 mm bewährt.

**Patentansprüche**

1. Verfahren zur Verhinderung der Brennbartbildung beim Trennen metallurgischer Erzeugnisse (1), beim Querteilen des Giessstranges in Stranggiessanlagen und beim Längsteilen bereits abgelängter Stranggussbrammen, bei dem die Erzeugnisse (1) mit einem oder mehreren auf einer Seite des Erzeugnisses angeordneten, der vorgegebenen Schnittlinie folgenden Autogen- oder Plasmaschneidbrennern (2) geteilt werden und bei dem sich auf der den Schneidbrennern (2) zugewandten Oberfläche des Erzeugnisses (1) eine vordere Schnittkante (5) und auf der anderen Seite des Erzeugnisses (1) eine hintere Schnittkante (6) ausbilden, dadurch gekennzeichnet, dass die hintere Schnittkante (6) mit mindestens einem gasförmigen Strahl (10) angeblasen wird.

2. Verfahren nach Anspruch 1, dadurch gekennzeichnet, dass das Anblasen mit mindestens einem kalten Gasstrahl (10) erfolgt.

3. Verfahren nach einem der Ansprüche 1 oder 2, dadurch gekennzeichnet, dass die hintere Schnittkante (6) mit mindestens zwei zur Schnittfuge (7) symmetrischen gasförmigen Strahlen (10) angeblasen wird.

4. Verfahren nach einem der Ansprüche 1 bis 3, dadurch gekennzeichnet, dass die gasförmigen Strahlen (10) auf die Bereiche gerichtet sind, in denen die hintere Schnittkante (6) in die Ränder der Schnittfuge (7) übergeht.

5. Verfahren nach einem der Ansprüche 1 bis 4, dadurch gekennzeichnet, dass die hintere Schnittkante (6) in Richtung der fortschreitenden Schnittfuge (7) angeblasen wird.

6. Verfahren nach einem der Ansprüche 1 bis 5, dadurch gekennzeichnet, dass die gasförmigen Strahlen (10) unter einem Winkel im Bereich von 0° bis ± 30° zur Tangentialebene des Erzeugnisses (1) im Bereich der hinteren Schnittkante (6) auf diese gerichtet werden.

7. Verfahren nach Anspruch 6, dadurch gekennzeichnet, dass die gasförmigen Strahlen (10) unter einem Winkel im Bereich von 0° bis ± 15° zur Tangentialebene des Erzeugnisses (1) im Bereich der hinteren Schnittkante (6) auf diese gerichtet werden.

8. Verfahren nach einem der Ansprüche 1 bis 7, dadurch gekennzeichnet, dass Druck und Richtung der gasförmigen Strahlen (10) unabhängig von dem Schneidstrahl (3) der Schneidbrenner (2) einstellbar sind.

9. Verfahren nach einem der Ansprüche 1 bis 8, dadurch gekennzeichnet, dass die gasförmigen Strahlen (10) ein unter schwächerem Druck als der Schneidstrahl (3) der Schneidbrenner (2) zugeführter Luft- oder Sauerstoffstrahl sind.

10. Verfahren nach einem der Ansprüche 1 bis 9, dadurch gekennzeichnet, dass bei mindestens. zwei gasförmigen Strahlen (10) diese unabhängig voneinander einstellbar sind.

11. Verfahren nach einem der Ansprüche 1 bis 10, dadurch gekennzeichnet, dass der Schneidstrahl (3) der Schneidbrenner (2) von oben auf das Erzeugnis (1) auftrifft und die ·gasförmigen Strahlen (10) auf die untere (hintere) Schnittkante (6) gerichtet werden.

12. Vorrichtung zur Durchführung des Verfahrens nach einem der Ansprüche 1 bis 11, dadurch gekennzeichnet, dass den Schneidbrennern (2) mindestens eine Gasstrahldüse (9) zugeordnet ist, die auf die hintere Schnittkante (6) des Erzeugnisses (1) gerichtet ist.

13. Vorrichtung nach Anspruch 12, dadurch gekennzeichnet, dass den Schneidbrennern (2) zwei zur Schnittfuge (7) symmetrisch angeordnete Gasstahldüsen (9) zugeordnet sind.

14. Vorrichtung nach einem der Ansprüche 12 oder 13, dadurch gekennzeichnet, dass die Gasstrahldüsen (9) unter einem Winkel (11) im Bereich von 0° bis ± 30° zur Tangentialebene des Erzeugnisses (1) im Bereich der hinteren Schnittkante (6) auf diese gerichtet sind.

15. Vorrichtung nach Anspruch 14, dadurch gekennzeichnet, dass die Gasstrahldüsen (9) unter einem Winkel (11) im Bereich von 0° bis ± 15° zur Tangentialebene des Erzeugnisses (1) im Bereich der hinteren Schnittkante (6) auf diese gerichtet sind.

16. Vorrichtung nach einem der Ansprüche 12 bis 15, dadurch gekennzeichnet, dass die Gasstahldüse (9) eine einen flachen Strahl (10) erzeugende Formstrahldüse ist.

17. Vorrichtung nach Anspruch 16 zur Ausübung des Verfahrens nach einem der Ansprüche 3 bis 11, gekennzeichnet durch eine Vierlochdüse (9') mit zwei Gruppen je zweier paralleler Bohrungen (15), wobei die Bohrungsachsen (16) jeder Gruppe mit der Mittelachse (17) der Düse (9') einen Winkel von 10 bis 20° einschliessen und die Bohrungsachsen (16) der beiden Gruppen in einem Winkel von 20 bis 40° zueinander und die Achsen (16) aller Bohrungen (15) in derselben Ebene liegen.

18. Vorrichtung nach einem der Ansprüche 12 bis 17, dadurch gekennzeichnet, dass die Gasstrahldüsen (9) über eine Haltevorrichtung (13, 14) und ein durch die Schnittfuge (7) hindurchführbares Schwert (12) mit den Schneidbrennern (2) zur gemeinsamen Verfahrbarkeit mechanisch verbunden sind.

19. Vorrichtung nach Anspruch 18, dadurch gekennzeichnet, dass die Haltevorrichtung (13, 14) aus einer Anstellvorrichtung (13) für das wegklappbare oder ·zurückziehbare Schwert (12) und aus einem Distanzstück (14) besteht.

20. Vorrichtung nach einem der Ansprüche 18 oder 19, dadurch gekennzeichnet, dass das Schwert (12) gekühlt ist.

**Claims**

1. Process for preventing the formation of flame burrs during the division of metallurgical products (1), during the transverse parting-off of the cast strand in continuous casting units, and during the longitudinal division of continuously cast slabs which have already been cut to lengths, in which process the products (1) are cut by means of one or more oxyacetylene torches, or plasma-type cutting torches (2), located on one side of the product and following the prescribed cutting line, and in which process a front cut edge (5) forms on that surface of the product (1) which faces the cutting torches (2), and a rear cut edge (6) forms on the other side of the product (1), characterised in that one or more streams of gas (10) are blown against the rear cut edge (6).

2. Process according to Claim 1, characterised in that blowing is effected with one or more cold gas jets (10).

3. Process according to one of Claims 1 or 2, characterised in that at least two gas jets (10), symmetrical with respect to the incision (7), are blown against the rear cut edge (6).

4. Process according to one of Claims 1 to 3, characterised in that the gas jets (10) are directed onto the regions in which the rear cut edge (6) merges into the edges of the incision (7).

5. Process according to one of Claims 1 to 4, characterised in that the gas is blown against the rear cut edge (6), in the direction in which the incision (7) is advancing.

6. Process according to one of Claims 1 to 5, characterised in that the gas jets (10) are directed onto the rear cut edge (6) at an angle, relative to the tangential plane of the product (1) in the region of the rear cut edge (6), ranging from 0° to ± 30°.

7. Process according to Claim 6, characterised in that the gas jets (10) are directed onto the rear cut edge (6) at an angle, relative to the tangential plane of the product (1) in the region of the rear cut edge (6), ranging from 0° to ± 15°.

8. Process according to one of Claims 1 to 7, characterised in that the pressure and direction of the gas jets (10) can be adjusted independently of the cutting jet (3) of the cutting torches (2).

9. Process according to one of Claims 1 to 8, characterised in that the gas jets (10) are jets of air or oxygen, supplied under a weaker pressure than that of the cutting jet (3) of the cutting torches (2).

10. Process according to one of Claims 1 to 9, characterised in that, if at least two gas jets (10) are used, these jets can be adjusted independently of each other.

11. Process according to one of Claims 1 to 10, characterised in that the cutting jet (3) of the cutting torches (2) strikes the product (1) from above, and the gas jets (10) are directed onto the lower (rear) cut edge (6).

12. Appliance for carrying out the process according to one of Claims 1 to 11, characterised in that at least one gas of Claims 1 to 11, characterised in that at least one gas jet nozzle (9) is assigned to the cutting torches (2), this nozzle being directed onto the rear cut edge (6) of the product (1).

13. Appliance according to Claim 12, characterised in that two gas jet nozzles (9), arranged symmetrically with respect to the incision (7), are assigned to the cutting torches (2).

14. Appliance according to one of Claims 12 or 13, characterised in that the gas jet nozzles (9) are directed onto the rear cut edge (6), at an angle (11), relative to the tangential plane of the product (1) in the region of the rear cut edge (6), ranging from 0° to ± 30°.

15. Appliance according to Claim 14, characterised in that the gas jet nozzles (9) are directed onto the rear cut edge (6) at an angle (11), relative to the tangential plane of the product (1) in the region of the rear cut edge (6), ranging from 0° to ± 15°.

16. Appliance according to one of Claims 12 to 15, characterised in that the gas jet nozzle (9) is a shaped jet nozzle which generates a flat jet (10).

17. Appliance according to Claim 16, for carrying out the process according to one of Claims 3 to 11, characterised by a four-hole nozzle (9') possessing two groups of parallel drilled holes (15), each group comprising two holes, the axes (16) of the drilled holes of each group enclosing, with the central axis (17) of the nozzle (9'), an angle of 10 to 20°, while the axes (16) of the drilled holes of the two groups are located at an angle of 20 to 40° to one another and the axes (16) of all the drilled holes (15) are located in the same plane.

18. Appliance according to one of Claims 12 to 17, characterised in that, in order to enable them to be moved conjointly, the gas jet nozzles (9) are mechanically connected to the cutting torches (2), by a holding device (13, 14), and a swordlike member (12) which can be passed through the incision (7).

19. Appliance according to Claim 18, characterised in that the holding device (13, 14) consists of a setting-up device (13) for the swordlike member (12) which can be folded away or retracted, and of a distance piece (14).

20. Appliance according to one of Claims 18 or 19, characterised in that the swordlike member (12) is cooled.

## Revendications

1. Procédé pour empêcher la formation de moustaches de combustion lors de la division de produits métallurgiques, lors de la division transversale du boin de coulée dans des installations de coulée continue et lors de la division longitudinale de brames de coulée continue déjà tronçonnées, division au cours de laquelle les produits (1) sont divisés par un ou plusieurs chalumeaux coupeurs (2) autogènes ou à plasma disposés d'un côté du produit et suivant la ligne de coupe prédéfinie et qui forment sur la face supérieure du produit (1) tournée vers les chalumeaux coupeurs (2) une arête de coupe antérieure (5) et sur l'autre face une arête de coupe postérieure (6), procédé caractérisé par le fait qu'on souffle au moins un jet gazeux (10) sur l'arête de coupe postérieure (6).

2. Procédé selon la revendication 1, dans lequel le soufflage est effectué avec au moins un jet gazeux froid (10).

3. Procédé selon l'une des revendications 1 et 2, dans lequel on souffle sur l'arête de coupe postérieure (6) au moins deux jets gazeux (10) symétriques par rapport à la fente de coupe (7).

4. Procédé selon l'une des revendications 1 à 3, dans lequel on dirige les jets gazeux (10) sur les zones dans lesquelles l'arête de coupe postérieure (6) se transforme en les arêtes de la fente de coupe (7).

5. Procédé selon l'une des revendications 1 à 4, dans lequel on souffle sur l'arête de coupe postérieure (6) dans la direction d'avancement de la fente de coupe (7).

6. Procédé selon l'une des revendications 1 à 5, dans lequel les jets gazeux (10) sont dirigés sur l'arête de coupe postérieure (6) selon un angle compris entre 0° et ± 30° par rapport au plan tangentiel au produit (1) dans la région de l'arête de coupe postérieure (6).

7. Procédé selon l'une des revendications 1 à 5, dans lequel les jets gazeux (10) sont dirigés sur l'arête de coupe postérieure (6) selon un angle compris entre 0° et ± 15° par rapport au plan tangentiel au produit (1) dans la région de l'arête de coupe postérieure (6).

8. Procédé selon l'une des revendications 1 à 7, dans lequel la pression et la direction des jets gazeux (10) sont réglés indépendamment du faisceau de coupe (3) des chalumeaux coupeurs (2).

9. Procédé selon l'une des revendications 1 à 8, dans lequel les jets gazeux (10) sont constitués d'un jet d'air ou d'oxygène amené sous une pression plus faible que celle du faisceau de coupe (3) du chalumeau coupeur (2).

10. Procédé selon l'une des revendications 1 à 9, dans lequel, avec au moins deux jets gazeux (10), ceux-ci sont réglables indépendamment l'un de l'autre.

11. Procédé selon l'une des revendications 1 à 10, dans lequel le faisceau de coupe (3) des chalumeaux coupeurs (2) tombe du haut sur le produit (1) et les jets gazeux (10) sont dirigés sur l'arête inférieure (postérieure) (6).

12. Dispositif pour la mise en œuvre du procédé selon l'une des revendications 1 à 11, caractérisé par le fait qu'au moins une buse à jet gazeux (9) est associée aux chalumeaux coupeurs (2) et est dirigée sur l'arête de coupe postérieure (6) du produit (1).

13. Dispositif selon la revendication 12, dans lequel deux buses à jet gazeux (9), symétriques par rapport à la fente de coupe (7), sont associées aux chalumeaux coupeurs (2).

14. Dispositif selon l'une des revendications 12 et 13, dans lequel les buses à jet gazeux sont dirigées sur l'arête de coupe postérieure (6) selon un angle (1) de 0° à ± 30° par rapport au plan tangentiel au produit (1) dans la région de l'arête de coupe postérieure (6).

15. Dispositif selon l'une des revendications 12 et 13, dans lequel les buses à jet gazeux sont dirigées sur l'arête de coupe postérieure (6) selon un angle (1) de 0° à ± 15° par rapport au plan tangentiel au produit (1) dans la région de l'arête de coupe postérieure (6).

16. Dispositif selon l'une des revendications 12 à 15, dans lequel la buse à jet gazeux (9) est constituée par une buse à jet de forme créant un jet plat (10).

17. Dispositif selon la revendication 16 pour la mise en œuvre du procédé selon l'une des revendications 3 à 11, dans lequel on utilise une buse à quatre trous (9') comprenant deux groupes de deux trous (15) parallèles entre eux, les axes (16) des trous de chacun des groupes formant avec l'axe moyen (17) de la buse (9') un angle de 10 à 20°, les axes (16) des trous des deux groupes se trouvant selon un angle compris entre 20 et 40° les uns par rapport aux autres, les axes (16) de tous les trous (15) se trouvant dans le même plan.

18. Dispositif selon l'une des revendications 12 à 17, dans lequel les buses à jet gazeux (9) sont reliées mécaniquement par l'intermédiaire d'un dispositif porteur (13, 14) et d'une diagonale (12) pouvant être guidée à travers la fente de coupe (7) pour le déplacement commun.

19. Dispositif selon la revendication 18, dans lequel le dispositif porteur (13, 14) est constitué d'un dispositif de réglage (13) pour la diagonale (12) repliable ou retirable et d'une pièce d'écartement (14).

20. Dispositif selon l'une des revendications 18 et 19, dans lequel la diagonale (12) est refroidie.

# Fig.1

Fig.2

Fig.3

Fig.4

Fig.5